# FASCICULE DE BREVET EUROPEEN

(11) **EP 1 050 456 B1**
(45) Date de publication et mention de la délivrance du brevet: **15.10.2003**
(21) Numéro de dépôt: 00401200.1
(22) Date de dépôt: 02.05.2000
(51) Int. Cl.: B64C 25/04

(54) **Structure d'attache d'un train d'atterrissage à un fuselage d'aéronef**
Verbindungsstruktur eines Flugzeugfahrwerkes zum Flugzeugrumpf
Attachment structure of a landing gear to an aircraft fuselage

(30) Priorité: 05.05.1999 FR 9905702
(43) Date de publication de la demande: 08.11.2000
(73) Titulaire: AIRBUS France, 31060 Toulouse (FR)
(72) Inventeur: Tizac, Laurent, 31170 Tournefeuille (FR); Ferran, François-Pierre, 31500 Toulouse (FR)
(74) Mandataire: Poulin, Gérard

(56) Documents cités:
- US-A- 5 000 400

## Description

### Domaine technique

L'invention concerne une structure d'attache d'un train d'atterrissage placé sous le fuselage d'un aéronef, au travers de laquelle les efforts supportés par le train, lorsqu'il est sorti et en contact avec le sol, sont transférés au fuselage.

L'invention s'applique à tout type d'aéronef. Toutefois, elle concerne plus particulièrement les avions gros porteurs, dans lesquels au moins deux trains d'atterrissage sont implantés sous le fuselage, de part et d'autre d'au moins une poutre ventrale faisant partie intégrante de celui-ci.

### Etat de la technique

Les trains d'atterrissage comme celui décrit dans US 5000400 B qui équipent les aéronefs ont principalement pour fonction de répartir les charges de l'avion lorsqu'il est au sol, c'est-à-dire pendant les phases de roulage, de décollage et d'atterrissage. A ce titre, la structure d'attache du train d'atterrissage au fuselage doit être capable de supporter intégralement la charge subie par le train lorsque l'avion ne vole pas. En effet, c'est au travers de la structure d'attache du train d'atterrissage sur la structure de l'avion que les efforts supportés par le train sont transmis au fuselage.

Si l'on associe à l'avion un repère orthonormé OXYZ dans lequel les axes OX, OY et OZ coïncident respectivement avec des axes longitudinal, transversal et vertical de l'avion, les principaux efforts qui s'appliquent au train d'atterrissage de l'avion sont des efforts orientés selon les axes OX, OY et OZ ainsi qu'un moment de torsion lorsque l'avion vire.

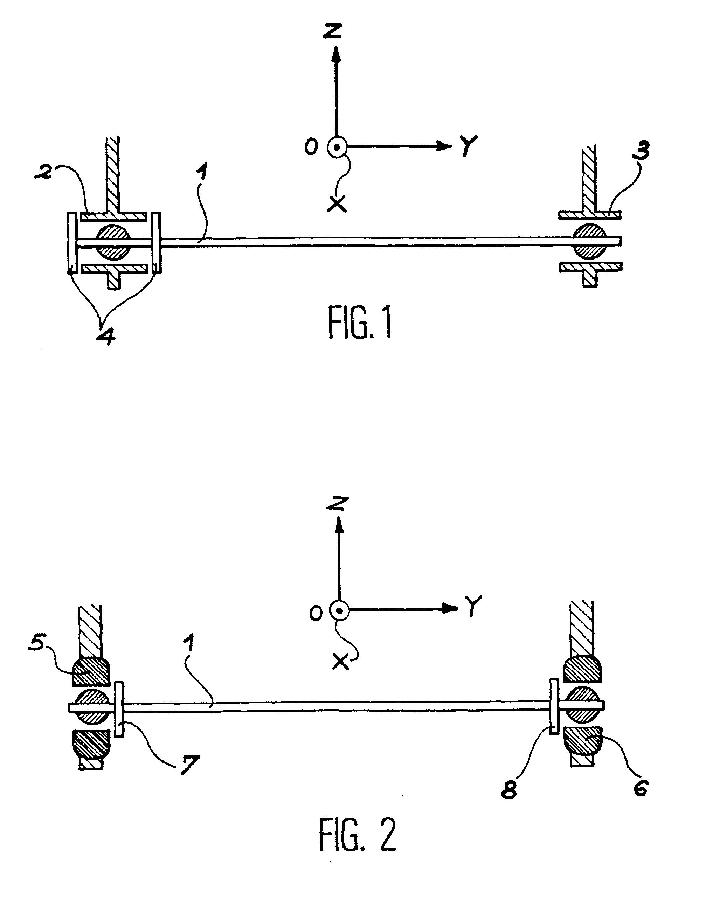

On a illustré de façon très schématique sur la figure 1 des dessins annexés une première structure d'attache connue d'un train d'atterrissage à la structure d'un avion. Ce type de montage est utilisé notamment sur les avions gros porteurs Boeing 747, pour relier au fuselage chacun des trains d'atterrissage placés sous celui-ci.

Dans une telle structure, les extrémités d'un fût 1 lié au train d'atterrissage, sont reçues dans deux paliers fixes 2 et 3, portés par le fuselage. Dans le cas d'un train d'atterrissage placé latéralement sous le fuselage, le palier extérieur 2 est lié directement au fuselage et le palier intérieur 3 est monté dans une poutre ventrale qui fait partie intégrante du fuselage.

Comme on l'a illustré schématiquement sur la figure 1, des moyens 4 sont prévus, dans ce cas, pour immobiliser axialement le fût 1 dans le palier extérieur 2 monté directement dans le fuselage de l'avion. Lorsqu'une telle structure d'attache est utilisée, les efforts longitudinaux et verticaux exercés selon les axes OX et OZ transitent symétriquement par les deux paliers 2 et 3, tandis que les efforts latéraux exercés selon l'axe OY transitent uniquement par le palier extérieur 2. La partie du fuselage dans laquelle est monté le palier extérieur 2 ainsi que la poutre ventrale dans laquelle est monté le palier intérieur 3 sont alors dimensionnées de façon à pouvoir reprendre intégralement les efforts susceptibles d'être transmis à chacun de ces paliers.

Lors de la conception d'un nouvel avion, on peut dimensionner la poutre ventrale, dans laquelle est monté le palier intérieur 3, afin que cette poutre soit capable de reprendre efficacement tous les efforts structuraux qui s'appliquent au fuselage durant le vol (flexion, torsion, etc.). La partie du fuselage dans laquelle est monté le palier extérieur 2 n'a alors plus besoin d'être renforcée.

Dans ces conditions, l'utilisation d'une structure d'attache telle qu'illustrée sur la figure 1 est exclue. En effet, le caractère non renforcé de la partie du fuselage dans laquelle serait monté le palier extérieur 2 ne permettrait pas de transférer de façon sûre à la structure de l'avion les efforts supportés par le train lorsque l'avion est au sol. Par ailleurs, il n'est pas envisageable d'augmenter le dimensionnement de la partie du fuselage supportant le palier extérieur 2 afin que cette partie du fuselage puisse assurer sans risque la transmission à la structure de l'avion des efforts supportés par le train. En effet, cela conduirait à de trop grandes dimensions, notamment dans le sens de l'épaisseur, ainsi qu'à une augmentation de coût et de masse inacceptable.

On pourrait envisager d'inverser le montage illustré sur la figure 1, c'est-à-dire de monter le palier 2 dans la poutre ventrale de l'avion et le palier 3 dans la structure du fuselage. Toutefois, cela nécessiterait un renforcement significatif de la partie de l'attache située du côté de la poutre ventrale. L'augmentation conséquente de la masse de l'attache qui en découlerait va également à l'encontre du but recherché.

Il est à noter, en outre, que le type de structure d'attache illustré sur la figure 1 conduit à la réalisation d'un fût dissymétrique. Cela impose d'utiliser deux matrices différentes pour fabriquer les fûts des trains d'atterrissage placés sous le fuselage. Compte tenu du caractère très coûteux de cette pièce, cela constitue un inconvénient notable du point de vue économique.

Enfin, le montage illustré sur la figure 1 a aussi pour inconvénient que l'assemblage est délicat à réaliser si les deux paliers 2 et 3 ne sont pas parfaitement alignés, du fait du caractère fixe de ces paliers.

Sur la figure 2 des dessins annexés, on a représenté de façon très schématique un deuxième type connu de structure d'attache d'un train d'atterrissage. Dans ce cas, le fût 1 est supporté à chacune de ses extrémités par deux rotules 5 et 6. Sur un avion gros porteur, ces rotules 5 et 6 sont montées respectivement dans la structure du fuselage et dans une poutre ventrale faisant partie intégrante du fuselage. La liaison entre le fût 1 et chacune des rotules 5 et 6 est réalisée de façon totalement symétrique, par l'intermédiaire de deux pièces de blocage 7 et 8. Ces pièces de blocage 7 et 8 sont aptes à transmettre les efforts latéraux selon l'axe OY respectivement à la rotule 5 ou à la rotule 6, selon que ces efforts sont exercés vers l'extérieur (vers la gauche sur la figure 2) ou vers l'intérieur de l'avion.

Par rapport au type de structure d'attache décrit précédemment en se référant à la figure 1, ce montage a pour avantages d'être symétrique et facile à assembler.

Toutefois, il conduit comme le précédent à transmettre les efforts selon l'axe OY directement au fuselage, au travers de la pièce de blocage 7 et de la rotule extérieure 5, lorsque ces efforts sont dirigés vers l'extérieur de l'avion. Comme on l'a déjà observé, cet agencement n'est pas satisfaisant dans le cas d'un avion de conception nouvelle, dont la poutre ventrale a été dimensionnée de façon à reprendre tous les efforts structuraux qui s'appliquent au fuselage pendant le vol et dans lequel, par conséquent, le fuselage n'est pas renforcé à ce niveau.

### Exposé de l'invention

L'invention a précisément pour objet un aéronef comprenant une structure d'attache d'un train d'atterrissage placé sous le fuselage de l'aéronef, permettant de transmettre à une poutre ventrale liée au fuselage l'ensemble des efforts latéraux supportés par le train, afin qu'il ne soit pas nécessaire de renforcer la structure du fuselage dans la zone d'attache du train, et sans pour autant accroître la masse de l'avion ni son coût.

Conformément à l'invention, ce résultat est obtenu au moyen d'un aéronef comprenant une structure d'attache d'un train d'atterrissage au fuselage de l'aéronef, ladite structure comprenant un fût lié au train d'atterrissage et dont des extrémités, tournées vers l'intérieur et vers l'extérieur de l'aéronef, sont supportées respectivement par une poutre ventrale et par une ferrure latérale liées au fuselage, structure caractérisée en ce qu'elle comprend de plus une barre de reprise d'efforts, qui relie la ferrure latérale à la poutre ventrale coaxialement au fût, de façon à transmettre, à la poutre ventrale, des efforts exercés par le fût sur la ferrure latérale selon l'axe du fût et vers l'extérieur de l'aéronef.

Avantageusement, chacune des extrémités du fût est supportée respectivement par la poutre ventrale et par la ferrure latérale, par l'intermédiaire d'une rotule.

Dans un mode de réalisation préféré de l'invention, le fût est creux et la barre de reprise d'efforts est logée à l'intérieur de celui-ci.

Avantageusement, la barre de reprise d'efforts est en appui sur la ferrure latérale et sur la poutre ventrale, de façon à travailler en traction.

Dans ce cas, une première extrémité de la barre est de préférence en appui sur une surface, tournée vers l'extérieur de l'aéronef, de la ferrure latérale et une deuxième extrémité de la barre est en appui sur une surface, tournée vers l'intérieur de l'aéronef, de la poutre ventrale.

Lesdites surfaces, sur lesquelles sont en appui les première et deuxième extrémités de la barre, sont avantageusement formées sur des capuchons traversés par la barre et recouvrant les rotules montées respectivement dans la ferrure latérale et dans la poutre ventrale.

Avantageusement, l'une des deux extrémités de la barre est démontable.

Enfin, des trous de lubrification des rotules sont avantageusement pratiqués dans les parties terminales de la barre.

### Brève description des dessins

On décrira à présent, à titre d'exemple non limitatif, un mode de réalisation préféré de l'invention, en se référant aux dessins annexés, dans lesquels :
- la figure 1, déjà décrite, représente très schématiquement un premier type de structure d'attache selon l'art antérieur ;
- la figure 2, déjà décrite, représente très schématiquement un deuxième type de structure d'attache selon l'art antérieur ;
- la figure 3 est une vue en coupe transversale d'un avion équipé de deux trains sous fuselage liés à la structure de l'avion par des structures d'attache conformes à l'invention ; et
- la figure 4 est une vue en coupe représentant à plus grande échelle la structure d'attache de l'un des trains d'atterrissage illustrés sur la figure 3.

### Description détaillée d'un mode de réalisation préféré de l'invention

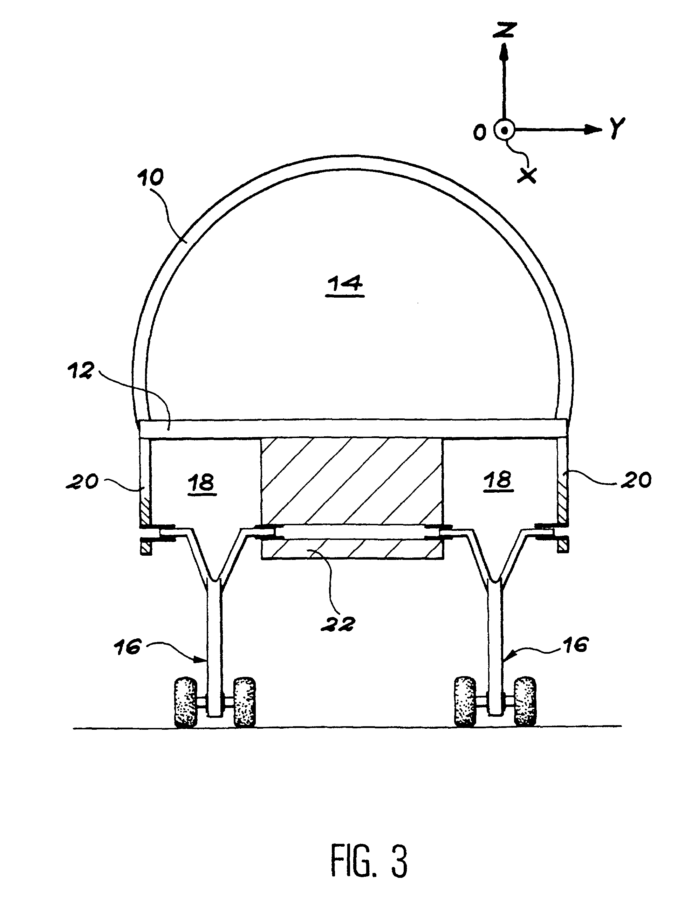

Sur la figure 3, on a représenté de façon très schématique la partie centrale d'un avion, coupé au droit du train d'atterrissage principal. L'avion comprend un fuselage 10 et un plancher 12, délimitant intérieurement une cabine pressurisée 14.

Dans sa partie illustrée sur la figure 3, le fuselage 10 est tronqué vers le bas, en dessous du plancher 12, de façon à pouvoir loger deux trains d'atterrissage 16 dans deux cases de train 18. Chacune des cases de train 18 est délimitée, vers l'extérieur de l'avion, par une ferrure latérale 20 fixée au fuselage 10 et, vers l'intérieur de l'avion, par une ou deux poutres ventrales 22.

Dans cet agencement, la ou les poutres ventrales 22 sont dimensionnées de façon à pouvoir reprendre intégralement tous les efforts structuraux qui s'appliquent au fuselage 10 durant le vol (flexion, torsion, etc.). Ce dimensionnement permet également à la ou aux poutres ventrales 22 de reprendre la moitié des efforts appliqués selon les axes OX et OZ, au travers des trains d'atterrissage 16, lorsque l'avion est au sol. Conformément à l'invention, la ou les poutres ventrales 22 reprennent aussi l'ensemble des efforts latéraux appliqués par les trains selon l'axe OY, lorsque l'avion est au sol.

Grâce à cet agencement, les ferrures latérales 20 n'ont pas besoin d'être renforcées. Conformément à l'invention, elles servent uniquement à transmettre au fuselage la moitié des efforts appliqués selon les axes OX et OZ par le train d'atterrissage 16 correspondant.

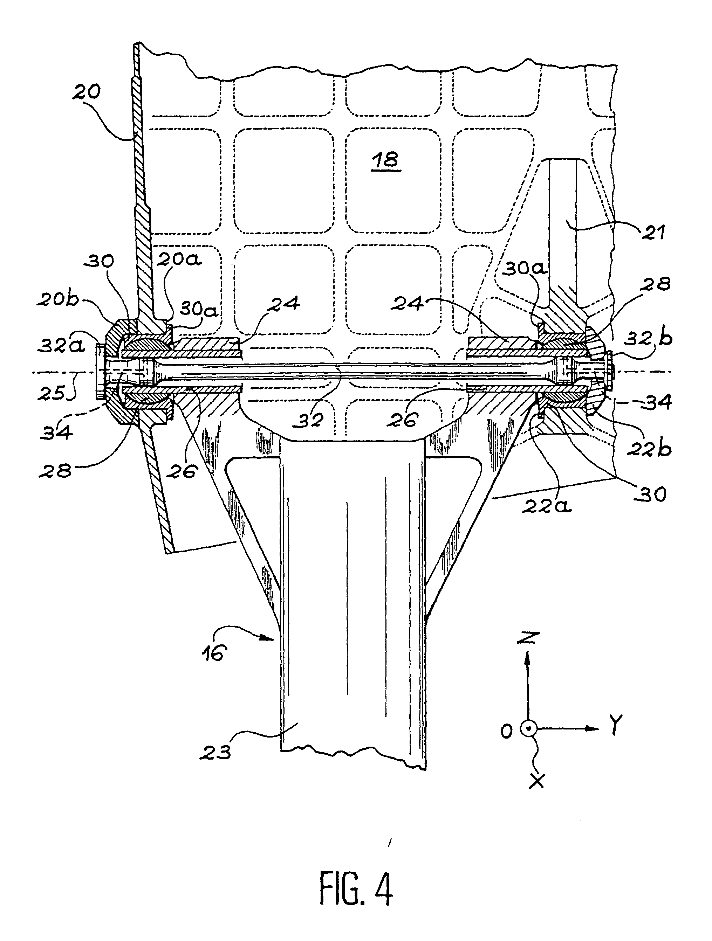

L'une des structures d'attache par lesquelles les trains d'atterrissage 16 sont montés sous le fuselage 10 de l'avion va à présent être décrite plus en détail en se référant à la figure 4.

Les deux structures d'attache étant identiques, la description s'applique indifféremment à l'une ou l'autre de ces structures, en appliquant une symétrie miroir.

Dans le cas d'un aéronef comprenant plusieurs paires de trains d'atterrissage implantées sous le fuselage, une structure d'attache comparable à celle qui va être décrite peut être utilisée pour chacun des trains.

Comme le montre la figure 4, la structure d'attache comprend un fût 24 formant la partie haute de la jambe de train 23 lorsque le train d'atterrissage 16 est sorti. Dans le mode de réalisation représenté, où la partie haute de la jambe de train 23 forme approximativement un Y, le fût 24 comprend deux parties cylindriques alignées selon un même axe 25, parallèle à l'axe transversal OY du repère OXYZ lié à l'avion.

Chacune des deux parties du fût 24 est montée sur un pivot creux 26. Ce pivot 26 se prolonge vers l'extérieur, par rapport à la jambe de train, de façon à pénétrer dans une sphère creuse 28 de rotule. Plus précisément, la sphère creuse 28 de rotule est fixée sur le pivot 26 correspondant et la partie adjacente du fût 24 tourne librement sur le pivot 26.

Chacune des sphères creuses 28 de rotule est montée rotulante dans un corps de rotule 30 muni d'une collerette 30a à l'une de ses extrémités. Chacun des ensembles constitués par une sphère creuse 28 et un corps de rotule 30 forme une rotule.

L'un des corps de rotule 30, tourné vers l'extérieur de l'avion (à gauche sur la figure 4), est fixé dans un alésage traversant la ferrure latérale 20 liée au fuselage. Plus précisément, la collerette 30a de ce corps de rotule 30 est en appui sur une face 20a de la ferrure latérale 20 tournée vers l'intérieur de la case de train 18.

De façon comparable, l'autre corps de rotule 30 (à droite sur la figure 4) est reçu dans un alésage pratiqué dans la poutre ventrale 22 et la collerette 30a formée sur ce corps de rotule 30 est en appui sur la face 22a de la poutre ventrale 22, tournée vers l'intérieur de la case de train 18.

L'agencement qui vient d'être décrit permet d'une part à la ferrure latérale 20 et d'autre part à la poutre ventrale 22 de reprendre la moitié des efforts longitudinaux et verticaux exercés selon les axes OX et OZ par le train d'atterrissage 16, lorsque l'avion est au sol.

Conformément à l'invention, cet agencement est complété par une structure particulière, permettant de transmettre intégralement à la poutre ventrale 22 l'ensemble des efforts latéraux exercés par le train 16 selon l'axe OY, sans entraîner aucun surdimensionnement et sans créer de dissymétrie dans le fût 24. Ainsi, le fût 24 peut être réalisé de façon symétrique par rapport à un plan médian parallèle aux axes OX et OY, comme l'illustre la figure 4. Cela réduit le coût de fabrication en permettant de fabriquer tous les fûts 24 des trains placés sous le fuselage à l'aide d'une seule matrice.

Cet agencement particulier se caractérise par la présence, dans la structure d'attache, d'une barre 32 de reprise d'efforts, qui relie la ferrure latérale 20 à la poutre ventrale 22, coaxialement au fût 24, de façon à transmettre intégralement à la poutre ventrale 22 des efforts latéraux éventuellement exercés par le fût 24 sur la ferrure latérale 20 vers l'extérieur de l'aéronef, selon l'axe OY.

De façon plus précise, la barre 32 de reprise d'efforts est une barre de traction, de section circulaire, qui est logée à coulissement dans les pivots creux 26 et traverse ainsi coaxialement le fût 24 et les rotules formées par les sphères creuse 28 et les corps de rotules 30.

A l'une de ses extrémités, prévue pour être tournée vers l'extérieur de l'avion (à gauche sur la figure 4), la barre 32 de reprise d'efforts comprend une tête 32a, maintenue normalement en appui contre la surface extérieure d'un capuchon 20b, lui-même en appui contre la surface extérieure de la ferrure latérale 20. Ce capuchon 20b est traversé par la barre 32 de reprise d'efforts et recouvre la rotule formée par la sphère creuse 28 et le corps de rotule 30 monté dans la ferrure latérale 20.

A son extrémité opposée, tournée vers l'intérieur de l'avion (à droite sur la figure 4), la barre 32 de reprise d'efforts comporte un filetage sur lequel est normalement vissé un écrou 32b. Cet écrou 32b est en appui contre une surface, tournée vers l'intérieur de l'avion, formée sur un capuchon 22b. Ce capuchon 22b est lui-même en appui contre une surface d'une ferrure intermédiaire 21 solidaire de la poutre ventrale 22 tournée vers l'intérieur de l'avion. Il recouvre la rotule formée par la sphère creuse 28 et le corps de rotule 30 monté dans la ferrure intermédiaire 21.

Ainsi, lorsque l'écrou 32b est serré, la barre 32 de reprise d'efforts est en appui à la fois sur la ferrure latérale 20 et sur la ferrure intermédiaire 21, de façon à travailler en traction entre ces deux pièces, selon l'axe transversal OY.

Le fût 24 forme deux pivots montés avec un léger jeu axial entre les faces en vis-à-vis, tournées vers l'intérieur de la case de train 18, des collerettes 30a des corps de rotule 30 montés respectivement dans la ferrure latérale 20 et dans la ferrure intermédiaire 21.

Par conséquent, lorsque le train d'atterrissage 16 est soumis à un effort latéral vers l'intérieur de l'avion selon l'axe OY, la partie du fût 24 la plus proche de la poutre ventrale 22 vient en appui contre la collerette 30a du corps de rotule 30 monté dans cette dernière. Cet effort latéral est donc transmis directement à la ferrure intermédiaire 21 liée à la poutre ventrale 22 au travers de la collerette 30a du corps de rotule correspondant.

Au contraire, lorsque le train d'atterrissage 16 est soumis à un effort latéral vers l'extérieur de l'avion selon l'axe OY, la partie du fût 24 la plus proche de la ferrure latérale 20 vient en appui contre la collerette du corps de rotule 30 monté dans cette ferrure. Cet effort latéral est alors appliqué sur la ferrure 20, qui le transmet intégralement à la barre 32 de reprise d'efforts au travers du capuchon 20b et de la tête 32a de la barre. A son tour, la barre 32 de reprise d'efforts transmet à la ferrure intermédiaire 21, liée à la poutre ventrale 22, au travers de l'écrou 32b et du capuchon 22b, l'effort latéral exercé vers l'extérieur de l'avion selon l'axe OY.

Par conséquent, la ferrure latérale 20 ne supporte aucun effort latéral selon l'axe OY. Elle n'a donc pas besoin d'être renforcée, de sorte que la masse de la structure d'attache n'est pas augmentée.

Comme on l'a également illustré sur la figure 4, des trous de lubrification 34 sont avantageusement usinés dans la barre 32, dans chacune de ses parties terminales, pour permettre d'amener de la graisse de lubrification dans les pivots, aux endroits où cela est nécessaire.

Comme on l'a déjà observé, l'agencement décrit préserve la symétrie du fût 24 par rapport à un plan perpendiculaire à l'axe OY. On réalise ainsi une économie appréciable, compte tenu du coût de la matrice nécessaire à la réalisation d'une telle pièce. En effet, ce caractère symétrique du fût 24 permet de réaliser dans la même matrice les fûts des trains d'atterrissage de droite et de gauche placés sous le fuselage.

En outre, l'assemblage de la structure est facilité par la présence des rotules interposées respectivement entre l'extrémité extérieure du fût 24 et la ferrure latérale 20 et entre l'extrémité intérieure du fût 24 et la ferrure intermédiaire 21. En effet, d'éventuels défauts d'alignement des trous formés dans la ferrure latérale et dans la ferrure intermédiaire sont aisément compensés par ces rotules.

Bien entendu, l'invention n'est pas limitée au mode de réalisation qui vient d'être décrit à titre d'exemple, mais en couvre toutes les variantes. Ainsi, on comprendra notamment qu'une telle structure d'attache peut être utilisée aussi bien sur un avion équipé d'une poutre ventrale unique que sur un avion équipé de deux poutres ventrales séparées l'une de l'autre.

## Revendications

1. Aéronef comprenant une structure d'attache d'un train d'atterrissage (16) au fuselage (10) de l'aéronef, ladite structure comprenant un fût (24) lié au train d'atterrissage et dont des extrémités, tournées vers l'intérieur et vers l'extérieur de l'aéronef, sont supportées respectivement par une poutre ventrale (22) et par une ferrure latérale (20) liées au fuselage (10), structure **caractérisée en ce qu'**elle comprend de plus une barre (32) de reprise d'efforts, qui relie la ferrure latérale (20) à la poutre ventrale (22) coaxialement au fût (24), de façon à transmettre, à la poutre ventrale (22), des efforts exercés par le fût (24) sur la ferrure latérale (20) selon l'axe (25) du fût et vers l'extérieur de l'aéronef.

2. Aéronef selon la revendication 1, dans laquelle chacune des extrémités du fût (24) est supportée respectivement par la poutre ventrale (22) et par la ferrure latérale (20), par l'intermédiaire d'une rotule (28,30).

3. Aéronef selon l'une quelconque des revendications 1 et 2, dans laquelle le fût (24) est creux et la barre (32) de reprise d'efforts est logée à l'intérieur dudit fût.

4. Aéronef selon l'une quelconque des revendications précédentes, dans laquelle la barre (32) de reprise d'efforts est en appui sur la ferrure latérale (20) et sur la poutre ventrale (22) de façon à travailler en traction.

5. Aéronef selon la revendication 4, dans laquelle une première extrémité (32a) de la barre (30) est en appui sur une surface, tournée vers l'extérieur de l'aéronef, de la ferrure latérale (20) et une deuxième extrémité (32b) de la barre est en appui sur une surface, tournée vers l'intérieur de l'aéronef, de la poutre ventrale (22).

6. Aéronef selon les revendications 2, 3 et 5 combinées, dans laquelle lesdites surfaces, sur lesquelles sont en appui les première et deuxième extrémités (32a,32b) de la barre (32), sont formées sur des capuchons (20b,22b) traversés par ladite barre et recouvrant les rotules (28,30) montées respectivement dans la ferrure latérale (20) et dans la poutre ventrale (22).

7. Aéronef selon l'une quelconque des revendications 5 et 6, dans laquelle l'une des première et deuxième extrémités (32a,32b) de la barre (32) est démontable.

8. Aéronef selon l'une quelconque des revendications précédentes, dans laquelle des trous (34) de lubrification des rotules (28,30) sont pratiqués dans des parties terminales de la barre (32).

## Patentansprüche

1. Luftfahrzeug mit einer Struktur zur Befestigung eines Fahrwerks (16) am Rumpf (10) des Luftfahrzeugs, wobei die Struktur einen Schaft (24) umfasst, der mit dem Fahrwerk verbunden ist und dessen ins Innere des Luftfahrzeugs und von diesem nach außen gerichtete Enden jeweils von einem ventralen Träger (22) bzw. von einer lateralen Armierung (20) gehaltert sind, die mit dem Rumpf (10) verbunden sind, wobei die Struktur **dadurch gekennzeichnet ist, dass** sie außerdem eine Kraftübertragungsstange (32) umfasst, welche die laterale Armierung (20) mit dem ventralen Träger (22) koaxial zum Schaft (24) so verbindet, dass vom Schaft (24) auf die laterale Armierung (20) entlang der Achse (25) des Schafts und vom Luftfahrzeug nach außen gerichtete Kräfte auf den ventralen Träger (22) übertragen werden.

2. Luftfahrzeug nach Anspruch 1, wobei jedes der Enden des Schafts (24) jeweils von dem ventralen Träger (22) bzw. der lateralen Armierung (20) über ein Kugelgelenk (28,30) gehaltert bzw. gelagert ist.

3. Luftfahrzeug nach einem der Ansprüche 1 oder 2, wobei der Schaft (24) hohl ist und die Kraftübertragungsstange (32) im Innern des Schafts gelegen ist.

4. Luftfahrzeug nach einem der vorangehenden Ansprüche, wobei die Kraftübertragungsstange (32) an der lateralen Armierung (20) und am ventralen Träger (22) derart anliegt bzw. sich abstützt, dass sie eine Zugbeanspruchung ausübt.

5. Luftfahrzeug nach Anspruch 4, wobei ein erstes Ende (32a) der Stange (30) an einer vom Luftfahrzeug nach außen gewandten Oberfläche der seitlichen Armierung (20) anliegt, und ein zweites Ende (32b) der Stange an einer ins Innere des Luftfahrzeugs gewandten Oberflächen des ve ntralen Trägers (22) anliegt.

6. Luftfahrzeug nach einer Kombination der Ansprüche 2, 3 und 5, wobei die Oberflächen, an denen die ersten und zweiten Enden (32a,32b) der Stange (32) anliegen, auf Kappen (20b,22b) ausgebildet sind, die von der Stange durchquert werden, und die jeweils die in der seitlichen Armierung (20) bzw. im ventralen Träger (22) angebrachten Kugelgelenke (28,30) bedecken.

7. Luftfahrzeug nach einem der Ansprüche 5 oder 6, wobei eines der ersten und zweiten Enden (32a,32b) der Stange (32) abnehmbar ist. einem der vorangehenden

8. Luftfahrzeug nach einem der vorangehenden Ansprüche, wobei Löcher (34) zur Schmierung der Kugelgelenke (28,30) in Endabschnitte der Stange (32) eingebracht sind.

## Claims

1. Aircraft comprising a structure for attaching landing gear (16) to the aircraft fuselage (10), said structure comprising a barrel (24) connected to the landing gear, the ends of which, turned towards the inside and towards the outside of the aircraft, are supported respectively by a ventral beam (22) and by a lateral fitting (20) connected to the fuselage, said structure being **characterized in that** it comprises a force take-up bar (32), which connects the lateral fitting (20) to the ventral beam (22) coaxially with the barrel (24), in such a way that forces exerted by the barrel (24) on the lateral fitting (20) along the axis (25) of the barrel and towards the outside of the aircraft, are transmitted to the ventral beam (22).

2. Aircraft according to to claim 1, in which each of the ends of the barrel (24) is supported respectively by the ventral beam (22) and by the lateral fitting (20), using a ball joint (28, 30).

3. Aircraft according to either of the claims 1 and 2, in which the barrel (24) is hollow and the force take-up bar (32) is housed inside said barrel.

4. Aircraft according to any one of the preceding claims, in which the force take-up bar (32) is pressed against the lateral fitting (20) and against the ventral beam (22) in such a way as to be under tension.

5. Aircraft according to claim 4, in which a first end (32a) of the bar (30) is pressed against a surface, turned towards the outside of the aircraft, of the lateral fitting (20) and a second end (32b) of the bar is pressed against a surface turned towards the inside of the aircraft, of the ventral beam (22).

6. Aircraft according to claims 2, 3 and 5 combined, in which said surfaces, against which the first and second ends (32a, 32b) of the bar (32) are pressed are formed on caps (20b, 22b) through which said bar passes and which cover the ball joints (28, 30) mounted respectively in the lateral fitting (20) and in the ventral beam (22).

7. Aircraft according to either of the claims 5 and 6, in which one of the first and second ends (32a, 32b) of the bar (32) can be disassembled.

8. Aircraft according to any one of the preceding claims, in which lubrication holes (34) for the ball joints (28, 30) are made in the end parts of the bar (32).
